Europäisches Patentamt

European Patent Office

Office européen des brevets

(11) Publication number: **0 324 311**
**A2**

# EUROPEAN PATENT APPLICATION

(21) Application number: **88500131.3**

(51) Int. Cl.⁴: **G01M 11/02**

(22) Date of filing: **30.12.88**

(30) Priority: **07.01.88 ES 8800024**
**07.01.88 ES 8800025**

(43) Date of publication of application:
**19.07.89 Bulletin 89/29**

(84) Designated Contracting States:
**DE FR GB IT**

(71) Applicant: **METROPTICA, S.L.**
**Sevilla, 28**
**E-50006 Zaragoza(ES)**

(72) Inventor: **Perez, José Jorge Gil**
**Urbanización Montesoria, 7**
**E-26006 Logrono(ES)**

(54) **Instrument for the measurement of optical scattering matrices.**

(57) This instrument carries out the measurement of optical scattering matrices of material samples by means of the detection, and susequent computer Fourier analysis of a periodic intensity signal of a light beam, emitted by a dye-laser (F) or a polychromatic source-monochromator set (F), that passes through the following ordered elements: a first polarizer (P-1), a first rotating optical retarder (R-1), the sample (S), a second rotating optical retarder (R-2) and a second polarizer (P-2). The light source, the first polarizer and the first rotating optical retarder are arranged on a first optical bench, while the second rotating retarder, the second fixed polarizer and the detector are arranged on a second optical bench. The rotation of both optical retarders, the selection of different wavelenghts of the light beam and the selection of different angular orientations of the benches are automatically performed by means of computer controlled motors and positioners.

FIG. 1

## INSTRUMENT FOR THE MEASUREMENT OF OPTICAL SCATTERING MATRICES

### TECHNICAL FIELD TO WHICH TE INVENTION RELATES

The invention relates to an instrument for the measurement of optical scattering matrices, designed for the study, analysis and control of the optical properties of any type of material sample. It should be noted that the understanding of optical properties of such materials as semiconductors, electric conductors and dielectric media (glasses, plastics, synthetic resins, etc.) is a fundamental element for the development of technologies and industrial processes in various different fields, including microelectronics, multilayered thin-film optics, fiber optics, holography, new materials research, etc.

### BACKGROUND OF THE INVENTION

It is well known that one of the procedures used to obtain information about the properties of the above mentioned materials, is to analyze the effects produced on the polarization of a light beam, which interacts with these materials under different particular conditions. The properties of interest may be optical constants; film thicknesses (deposits or multilayers); birefringence and dichroism; polarization and depolarization indexes; form and size of particle suspensions (such as aerosols, hidrosols and colloids); mechanical stresses in transparent media, etc. These and other properties can be measured and studied -in some cases exclusively- by means of this procedure.

The most complete information about these properties is contained in the so-called scattering matrix, a 4x4 matrix of real elements, which is characteristic of each material, given the particular conditios of the interaction with polarized light (incident and detection angles, position of the sample, temperature, wavelength...).

As a consequence of the great interest in the study, control and measurement of the above mentioned properties, several different instruments have been developed over the past few decades. Among these are the so-called ellipsometers, which use a totally polarized light beam that is submitted to polarization analysis after having interacted with the sample under measurement. In this way, two independent parameters, known as ellipsometric parameters, are obtained. These parameters are related to certain characteristics of the sample, such as optical constants for exemple. However, a complete characterization of the optical properties of the sample requires the knowledge of its corresponding scattering matrix, which usually contains 16 independent elements. Even in the case of the depolarization effecs are negligible, the scattering matrices contains 7 independent elements. Thus, ellipsometers are quite limited in many cases in characterizing the optical properties of a material sample. It may also be pointed out that the ellipsometric measurements require certain previous information about the sample, such as the polarization eigenstates (ivariable polarization states during interaction). Furthermore, the nonexistence of light depolarization phenomena during interactions must be presupposed in order to carry out any ellipsometric measurement.

The development of an instrument for the measurement of optical scattering matrices adaptable to the different specific conditions required by any type of sample, allows important technological advantages. Thus, a such instrument may be considered as a powerful tool for numerous different laboratories and industries. Also, from a practical point of view, non destructive, "in situ" and real time measurements are required.

### GENERAL DESCRIPTION OF THE INVENTION

This invention was designed to avoid the disadvantajes of previous instruments in this field, and consequently it offers certain especially advantageous features such as: automatic and dynamic measurement of the 16 scattering matrix elements of any type of material sample; successive and automatic tuning of wavelenght and interaction angles, and automatic self-calibration (without te need of a material test in fact) of the optical elements that the instrument contains (optical retarders and polarizers). Also, this instrument carries out nondestructive measurements, since the material sample only interacts with a low-intensity light beam.

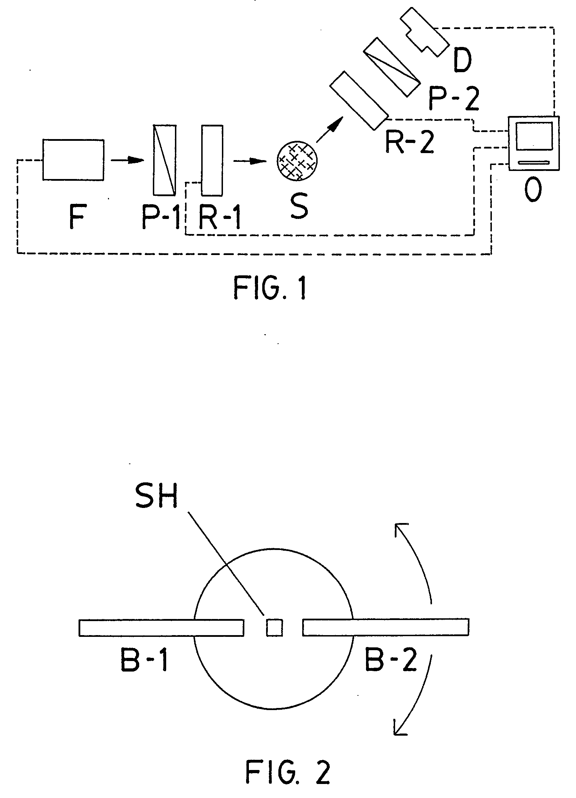

The way the instrument of the measurement of optical scattering matrices works - as seen in Figure 1 - essentially consists of the following: The computer "O" calculates the optical scattering matrix of a sample "S" by means of the Fourier analysis of a periodic signal provided by a detector "D"; so that D detects the intensity of a light beam after it has passed through a system containig: a first fixed polarizer "P-1", a first rotating optical retarder "R-1", the sample, a second rotating optical retarder and a second fixed polarizer "P-2".

As can be seen in Figure 1, this instrument contains certain fundamental elements, such as the two polarizers: P-1 and P-2; the two optical retarders: R-1 and R-2; the light source "F", and the light intensity detector D. These elements are all mounted in a mechanical frame which includes two optical benches so that they are orientable with different relative angles. One of these optical benches holds the light source F, the polarizer P-1 and the optical retarder R-1, while the other optical bench holds the optical retarder R-2, the polarizer P-2 and the detector D. These two sets will be hereafter called "polarizer arm" and "anlyzer arm" respectively. By means of automatically adjustable mechanical holders and stages, the computer, equipped with A/D converter and other adequate interfaces, carries out the control of the positioning of the benches, the retarders and the sample, and it also performs the tuning of the light beam wavelenght.

Each retarder rotates around the axis defined by the direction of the collimated light beam which passes through it. This rotation is produced by means of motors so that the rate between the mean angular speeds of the retarders is a rational number. The particular value of this number can be fixed in the instrument, or can be specified via software. Under these conditions, the detected light intensity signal is periodic, then a sampling of the signal is registered by the computer through the A/D converter. Once these values are stored in the computer's memory, they are used as input data in a fast Fourier analysis program. This program calculates the Fourier coefficients corresponding to a complete period of the signal. From these coefficients, taking into account of the corresponding linear equations, the program carries out the calculation of the 16 elements of the sample's scattering matrix.

Self-calibration (measurement of the characteristic parameters of P-1, P-2, R-1, R-2) can be performed from the signal generated in direct transmission without sample, since in that case the signal only depends on the above parameters. These calibration parameters are: the orientation angles of the characteristic axes of the polarizers and retarders with respect the predetermined reference axis; the effective retardation values of the retarders, and the principal intensity transmission coefficients of the retarders.

## DETAILED DESCRIPTION

A detailed description of the particular characteristics of the different components and their specifications follows.

Polarizers: the polarizers P-1 and P-2 have the purpose of leaving the polarization of the light beams that pass through them, in fixed polarization states. Since in both cases a high degree of polarization is desirable, polarizers with high extinction coefficients are required. So, for example, polarizing prisms (as Glan, Nicol, Rochon, Wollaston, Cornu, etc. types) or dichoic sheet polarizers (as Polaroid HN22, HN32... or Käsemann M1K, W58... types) can be used. If infrared radiation is required, metallic grid polarizers can be used. Each polarizer is mounted on a respective holder with adjustable tilting so that optimum perpendicularity between the plane containing the extinction axis of the polarizer and the light beam direction is allowed.

Optical retarders: Both retarders R-1 and R-2 modulate the state of polarization of the light beams the pass through them. For this purpose, respective motors produce their rotation, either in a continuous mode or stepping mode. There are not particular specifications for the elements R-1 and R-2, except that they must operate effectively as optical retarders for the used light wavelenght, and their properties must be homogeneus in all the area were the inteaction with the light beam occurs. Plates of mica or crystaline quartz, commercial Polaroid retarders, or Soleil compensators can be used as retarders.

Light source: This element must emit a sufficiently intense light beam for the required light wavelenght, in order to the light intensity be measurable by a photodiode detector, a photomultiplier or by photon counting techniques, whit an acceptable noise/signal coefficient. As a source of coherent light, a laser of the desired wavelenght should be used. If a variable wavelenght is desired, a tunable dye laser of adequate spectral range should be used. As an incoherent light source , a Xe-arc lamp, a discharge lamp, a quartz halogen lamp or any other light source that satisfies the above mentioned requirements can be used. For the automatic selection of different wavelenghts from polychromatic lamps, a computer controlled monochromator must be used.

Detector: The light detector must have a linear response and sufficient sensitivity for the specific conditions of each type of measurement. Then, for example, a photomultiplier, a photodiode or a photovoltaic cell may be used as detector. Factors such as the wavelenght, the intensity of the light beam , etc., will determine what type of detector might be appropriate.

Computer: The data storage and its treatment are carried out by the computer. Except for high speed measurements, a commercial personal computer is sufficient for the majority of applications. The Fourier analysis can be carried out by means of a fast Fourier transform algorithm program (FFT). For fast real-time measurements, hardware data processing through a microprocessor especially designed for this purpose is required. A specific program allows the calculation of the calibration parameters when the device operates in the absence of sample and under direct transmission conditions. The movement of the motors of the different mechanical positioners, and the monochromator or dye laser are controlled by the computer through standard interfaces (IEEE 488, RS 232, HP-IB,...).

Optic filters: When a polychromatic light source is used, the selection of wavelenghts of the light beam can be carried out by means of spectral filters. In addition, for measurements with light in the visible range, it is appropriate to use an IR elimination filter to avoid undesired background radiation. It is also useulf to have a set of neutral filters for those measurements in which the intensity of light should be weakened. These filters can be placed in any location within the trajectory of the light beam.

Optical image elements: The light beam should interact with the sample under the same conditions in all its section. For this reason, except if a collimated laser beam is used, it is necessary to use a collimator, which should be located in front of the polarizer P-1. For optimum incidence of the light beam on the detector, the use of an optic condenser system that concentrates the radiation within the detector's active area is required. In the case of fiber optics measurements, suitable optic objectives for the introduction of the light into the fiber are required, and the ends of the fiber must be placed under optimum conditions by micrometric positioners. When analyzing samples by reflection, the placing of the sample in the required angular conditions is done by means of an alignment telescope or a laser, so that its optic axis lyes in the plane formed by the optic axes of the polarizer and anlyzer arms.

Mechanical elements: The various different optical elements of this instrument are placed in such a manner that their interaction with the light beam in the desired way is possible. The fundamental elements of the polarizer arm (source, P-1 and R-1) as well as the other complementary components that can be included (collimator, monochromator, filters,...) are mounted on as optic bench "B-1" by means of respective holders that allow the adequate positioning in order to the light beam to define itself the optic axis of the system. In the same way, the optical elements of the analyzer arm are mounted on another optic bench "B-2". The holders that fix R-1 and R-2 to B-1 and B-2 respectively, each have a motor that transmits the desired rotatory movement. This transmission can be carried out, for exemple, through pulleys or gears. The light source is fixed to B-1 through a holder that allows longitudinal, transversal and tilting adjustements so that the direction of the emergent light beam can be suitably arranged. The detector holder are similar. In general, commercial holders available from laboratory business can be used. Figure 2 show schematically the relative arrangement of B-1 and B-2. Both optic benches are linked by means of a mechanical stage that holds them both and which allows the selection of the relative angle formed by them. The sample is linked to the mechanical stage "SH" by means of a movable and adjustable holder which allows the sample to be correctly placed and oriented. For the obtention of measurements at different angles between B-1 and B-2, a stepping motor moves the optic bench B-2 (in relation to B-1 and the mechanical stage) in such a manner that during each measurement of a particular scattering matrix, the angle between B-1 and B-2 are fixed. Both benches can be dismounted from the mechanical stage, so that they can be rearranged without restrictions. This can be important when measuring the characteristics of a sample that requires such flexibility, as, for exemple, in the case of "in situ" measurements of fiber optics birefringence.

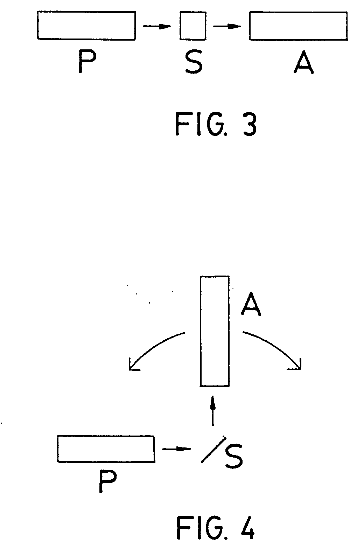

Figure 3 shows the arrangement of the instrument for direct transmission and calibration operation, while Figure 4 shows the typical arrangement for reflection and scattering measurements. "P" and "A" represents the polarizer and analyzer arms respectively, while "S" represents the material sample whose scattering matrix is to be measured. Thus, for example, the measurement of the transmission scattering matrix of a plate of anisotropic material would require the arrangement shown in Figure 3. However, for the same plate, the measurement of the reflection scattering matrices for different reflection angles would require an arrangement as the one shown in Figure 4.

## Claims

1.- An instrument for the measurement of optical scattering matrices of material samples, that performs the detection and computer Fourier analysis of a periodic light intensity signal; characterized in that the intensity of a light beam emitted by a light source is detected after passing through the following ordered elements: a first fixed polarizer, a first rotating optical retarder, the sample, a second rotating optical retarder and a second fixed polarizer; in such a manner that the light source, the first polarizer and the first rotating optical retarder are arranged on a first optical bench through respective mechanical holders; while the second rotating retarder, the second fixed polarizer and the detector are similarly arranged on a second optical bench whose optical axis can be arranged in different angular orientations respect to the first optical bench's optical axis; so that the computer regulates the synchronized movements of the motors that produce the rotation of the optical retarders around respective axes parallel to the directions of the light beams that pass through them.

2.- An instrument for the measurement of optical scattering matrices, according to claim 1, wherein the wavelenght of the light beam is automatically controlled by the computer by using a tunable-wavelenght light generator set.

3.- An instrument for the measurement of optical scattering matrices, according to claim 1, wherein computer controlled stepping motors allow a scanning of the placement of the sample spot and a scanning of successive relative angular orientations of the benches's optical axis.

4.- An instrument for the measurement of optical scattering matrices, according to claim 1, wherein a direct transmission without sample arrangement is mechanically allowed, for the self-calibration measurement of the angular orientations of the polarizers, the reference angular orientations of the retarders, the effective retardation values of the retarders and the principal intensity-transmission coefficients of the retarders.

FIG. 1

FIG. 2

P → S → A

FIG. 3

A

/S

P

FIG. 4